(19) **Europäisches Patentamt** / **European Patent Office** / **Office européen des brevets**

(11) **EP 1 181 613 B1**

(12) **FASCICULE DE BREVET EUROPEEN**

(45) Date de publication et mention de la délivrance du brevet:
**03.06.2009 Bulletin 2009/23**

(21) Numéro de dépôt: **00917163.8**

(22) Date de dépôt: **07.04.2000**

(51) Int Cl.:
*G02B 27/01* (2006.01)   *A42B 3/22* (2006.01)
*F41G 3/22* (2006.01)

(86) Numéro de dépôt international:
**PCT/FR2000/000898**

(87) Numéro de publication internationale:
**WO 2000/063737 (26.10.2000 Gazette 2000/43)**

(54) **VISIERE POUR CASQUE**

VISIER FÜR HELM

VISOR FOR A HELMET

(84) Etats contractants désignés:
**DE FR GB NL**

(30) Priorité: **16.04.1999 FR 9904820**

(43) Date de publication de la demande:
**27.02.2002 Bulletin 2002/09**

(73) Titulaire: **THALES AVIONICS S.A.**
**78140 Vélizy Villacoublay (FR)**

(72) Inventeur: **POTIN, Laurent**
**94117 Arcueil Cedex (FR)**

(74) Mandataire: **Beylot, Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:

| | |
|---|---|
| **EP-A1- 0 576 160** | **EP-A2- 0 730 183** |
| **WO-A1-86/01598** | **WO-A1-91/06031** |
| **WO-A1-99/30199** | **FR-A1- 2 233 589** |
| **FR-A1- 2 764 997** | **FR-A1- 2 769 721** |
| **US-A- 3 697 154** | **US-A- 4 026 641** |
| **US-A- 4 729 634** | **US-A- 5 650 869** |
| **US-A- 5 734 505** | **US-A- 5 801 885** |
| **US-A- 5 815 326** | **US-A- 5 818 641** |

EP 1 181 613 B1

**Description**

La présente invention concerne les casques à visière de protection et notamment ceux équipés d'un système optique de projection d'image permettant d'afficher devant les yeux du porteur du casque, une image synthétique superposée à sa vue du monde extérieur

Ce genre de casques doit répondre à un certain nombre de contraintes, notamment des contraintes d'encombrement car il est destiné à être utilisé dans des espaces restreints comme le cockpit d'un avion ou d'un hélicoptère, des contraintes de poids et de moment cinétique pour limiter les fatigues au niveau du cou du porteur. Ces contraintes amènent à alléger au maximum les éléments du système de projection d'image et à les placer au plus près possible du centre de gravité de la tête du porteur.

Les éléments d'un système de projection d'image pour casque sont en général rejetés, à l'exception du combineur optique permettant de superposer l'image synthétique projetée au paysage devant les yeux du porteur du casque, à la périphérie supérieure du casque car ils ne doivent pas empiéter sur l'espace visuel du porteur du casque ni venir à la périphérie inférieure du visage du porteur du casque qui est réservée à un équipement éventuel de respiration (masque à oxygène). L'image synthétique engendrée par le système de projection d'image est donc appliquée au combineur placé devant les yeux du porteur du casque depuis un système optique occupant la zone frontale.

Par ailleurs, le casque est toujours équipé d'une ou plusieurs visières de protection relevables, par exemple une visière de protection mécanique contre le vent, les poussières... et une visière de protection optique contre le soleil ou les agressions laser. Cette ou ces visières de protection mobiles sont totalement amovibles ou s'escamotent en pivotant au-dessus de la tête du porteur du casque en passant par-dessus des éléments du système de projection d'image placés dans la zone frontale. Pour un moindre encombrement lors de leur mouvement de mise en place et d'escamotage, il est habituel de donner aux visières une forme générale sphérique et de les articuler sur le casque autour d'un axe de rotation placé dans la zone frontale du casque et passant par le centre de leur sphère. En outre, pour des facilitées de fabrication, les visières qui sont généralement obtenues par thermoformage d'une plaque de plastique transparent d'épaisseur uniforme, ont souvent, une forme finale bisphérique concentrique avec une épaisseur constante et deux faces : une face interne et une face externe sphériques et concentriques.

Les positions des yeux du porteur du casque sont excentrées latéralement et vers le bas par rapport au centre des sphères des faces externes et Internes des visières, selon des angles dépassant les 20 degrés. Ces excentrements font que les rayons lumineux parvenant aux yeux du porteur du casque traversent les parois des visières sous des angles éloignés de la normale et subissent à l'occasion de ces traversées, des phénomènes de réfraction provoquant des décalages et des distorsions d'image.

Ainsi, le porteur d'un casque constate, lorsqu'il met en place une visière, à la fois un décalage vers le haut de l'image du paysage qu'il perçoit et des distorsions de cette image.

Le décalage introduit par une visière varie avec la direction dans laquelle regarde le porteur du casque car la valeur de l'angle d'excentrement dépend de cette direction. Il est de l'ordre de 0,4 degrés lorsqu'il regarde droit devant et s'aggrave rapidement lorsqu'il dévie son regard sur les côtés ou vers le bas. Ce décalage a l'inconvénient de jouer sur la superposition perçue par le porteur du casque entre une image synthétique projetée et le paysage qu'il perçoit.

Jusqu'à présent, le décalage et les distorsions d'image dus aux visières étaient négligés, le décalage parce qu'il n'avait pas d'influence notable sur la précision des systèmes de désignation utilisant un viseur de casque et les distorsions d'image parce que le porteur du casque peut, la plupart du temps, se satisfaire d'un espace de vision réduit en orientant son champ de vision plus par déplacement de sa tête que par déplacement de ses yeux.

Avec l'amélioration de la précision des systèmes de désignation à viseur de casque, l'influence des décalages d'image dus à la présence des visières sur les erreurs de visée ne peut plus être négligée.

Le décalage introduit dans l'axe de vision par la visière de protection ou visière claire est facile à prendre en compte. En effet, comme cette visière est en général maintenue abaissée durant toute une mission, on peut tenir compte une fois pour toutes du décalage qu'elle introduit par un décalage dans le même sens de l'image synthétique projetée.

Le décalage introduit dans l'axe de vision par la ou les visières supplémentaires de protection optique est plus gênant car le porteur du casque est amené à mettre ou escamoter ces visières en fonction des conditions d'éclairage rencontrées ou des menaces laser qui peuvent être très variables au cours d'une même mission. Si l'on cherche à le compenser en décalant dans le même sens l'image synthétique projetée, il ne faut le faire que lorsque ces visières sont abaissées, ce qui implique que l'on est capable de détecter à tout instant les positions de ces visières. Cette détection de position peut être obtenue en équipant le casque de capteurs de position de visières mais cela va à l'encontre du souci général d'allégement du casque.

En outre, la compensation du décalage du paysage dû à la présence des visières par un décalage analogue de l'image synthétique projetée doit être faite en fonction de la direction du regard du porteur du casque puisque la valeur de l'angle d'excentrement et donc du décalage en dépend. On pourrait penser à détecter la position oculaire du porteur du casque et décaler l'image synthétique de la valeur observée dans la direction visée par le porteur du casque mais cette correction dynamique de l'image synthétique est difficilement ressentie par le porteur du casque qui voit une image synthétique semblant onduler avec la direction de son regard.

La compensation du seul décalage ne permet pas de corriger la distorsion d'image due aux visières qui est pourtant particulièrement gênante pour les systèmes à vision nocturne ou à infrarouge car elle conduit à une mauvaise superposition de l'image synthétique avec le paysage perçu au travers des visières. Pour améliorer cette superposition, on pourrait penser à faire subir à l'image synthétique une distorsion analogue par traitement d'image mais cela nécessiterait d'introduire sur le casque des moyens de correction optiques ou numériques beaucoup trop pesants.

Le document US-A-4 081 209 divulgue une visière de protection pour casque comprenant des parois sphériques. Le document US-A-5 689 323 enseigne la correction de la distorsion prismatique par désaxement de deux surfaces.

La présente invention a pour but de lutter contre les inconvénients précités en jouant sur les propriétés optiques des visières de protection.

Elle a pour objet une visière de protection pour casque contenant toutes les caractéristiques récitées dans la revendication 1.

Avantageusement, lesdits moyens optiques de correction consistent en un désaxement relatif entre les deux faces sphériques de la paroi de la visière donnant à cette paroi une épaisseur variable et entraînant un effet prismatique corrigeant le décalage angulaire perçu par le porteur du casque lorsqu'il regarde au travers de la visière dans une direction déterminée.

Avantageusement, lesdits moyens optiques de correction consistent en un désaxement relatif de la face extérieure de la visière par rapport à la face intérieure dans un plan vertical.

Avantageusement, lesdits moyens optiques de correction consistent en un désaxement vers le haut d'un angle de l'ordre du demi degré de la face extérieure de la visière par rapport à la face intérieure de la visière.

Avantageusement, lesdits moyens optiques de correction consistent en une réduction du rapport du rayon de courbure de la face extérieure de la visière sur le rayon de courbure de la face intérieure de la visière par rapport à celui d'une visière bi-sphérique concentrique d'épaisseur constante

Avantageusement, lesdits moyens optiques de correction consistent en une variation du rapport du rayon de courbure de la face extérieure sur celui de la face intérieure de la visière de l'ordre de 1/100 ième par rapport à une visière bi-sphérique concentrique d'épaisseur constante.

Avantageusement, lesdits moyens optiques de correction consistent en l'adoption pour la visière d'une face sphérique et d'une face asphérique, la face asphérique approchant une forme théorique minimisant les distorsions, obtenue par calcul à partir d'une forme sphérique approximée par des facettes polygonales, chaque facette étant réorientée de manière à corriger le décalage angulaire qu'elle impose aux rayons lumineux parvenant aux yeux du porteur du casque, les facettes réorientées étant repositionnées en profondeur les unes par rapport aux autres en commençant par le centre de la visière et en finissant par les côtés, pour obtenir une surface présentant un minimum d'aspérités et la surface à facettes obtenue étant lissée par le calcul.

Avantageusement, ladite face asphérique approchant une forme théorique minimisant les distorsions, obtenue par le calcul est de type torique.

Avantageusement, lesdits moyens optiques de correction consistent en l'adoption pour la visière de deux faces asphériques obtenues en deux étapes à partir de deux faces initialement sphériques, une première face asphérique étant déterminée au cours d'une première étape en approximant une première forme théorique minimisant les distorsions inhérentes aux formes sphériques initiales, cette première forme théorique étant obtenue par calcul à partir d'une forme sphérique approximée par des facettes polygonales, chaque facette étant réorientée de manière à corriger le décalage angulaire qu'elle impose aux rayons lumineux parvenant aux yeux du porteur du casque, les facettes réorientées étant repositionnées en profondeur les unes par rapport aux autres en commençant par le centre de la visière et en finissant par les côtés pour obtenir une surface avec un minimum d'aspérités et la surface à facettes obtenues étant lissées par le calcul, et une deuxième face asphérique étant obtenue au cours d'une deuxième étape en approximant une deuxième forme théorique minimisant les distorsions inhérentes à la forme sphérique-asphérique obtenue au cours de la première étape, cette deuxième forme théorique étant obtenue par calcul à partir d'une forme sphérique approximée par des facettes polygonales, chaque facette étant réorientée de manière à corriger le décalage angulaire qu'elle impose aux rayons lumineux parvenant aux yeux du porteur du casque, les facettes réorientées étant répositionnées en profondeur les unes par rapport aux autres en commençant par le centre de la visière et en finissant par les côtés pour obtenir une surface avec un minimum d'aspérités et la surface à facettes obtenues étant lissée par le calcul.

Avantageusement, lesdites faces asphériques approchant des formes théoriques minimisant les distorsions, obtenues par le calcul, sont de type torique.

Avantageusement, lesdits moyens optiques de correction consistent en un désaxement relatif entre les deux faces sphériques de la visière entraînant un effet prismatique corrigeant le décalage angulaire perçu par le porteur du casque lorsqu'il regarde au travers de la visière dans une direction arbitraire et en l'adoption d'un rapport entre le rayon de courbure de la face extérieure de la visière sur le rayon de courbure de la face intérieure de la visière inférieure à celui d'une visière bi-sphérique concentrique d'épaisseur constante.

Avantageusement, lesdits moyens optiques de correction consistent en un désaxement relatif entre les deux faces de la visière entraînant un effet prismatique corrigeant le décalage angulaire perçu par le porteur du casque lorsqu'il regarde au travers de la visière dans une direction arbitraire et en l'adoption pour la visière d'une face sphérique et d'une face asphérique configurée, relativement à la face sphérique, de manière à réduire les décalages angulaires résiduels dans une zone de la visière axée sur ladite direction arbitraire.

Avantageusement, lesdits moyens optiques de correction consistent en un désaxement relatif entre les deux faces de la visière entraînant un effet prismatique corrigeant le décalage angulaire perçu par le porteur du casque lorsqu'il regarde au travers de la visière dans une direction arbitraire et en l'adoption pour la visière d'une face sphérique et d'une face asphérique de type torique configurée, relativement à la face sphérique, de manière à réduire les décalages angulaires résiduels dans une zone de la visière axée sur ladite direction arbitraire.

Avantageusement, lesdits moyens optiques de correction consistent en un désaxement relatif entre les deux faces de la visière entraînant un effet prismatique corrigeant le décalage angulaire perçu par le porteur du casque lorsqu'il regarde au travers de la visière dans une direction arbitraire et en l'adoption pour la visière de deux faces asphériques configurées l'une par rapport à l'autre de manière à réduire les décalages angulaires résiduels dans une zone de la visière axée sur ladite direction arbitraire.

Avantageusement, lesdits moyens optiques de correction consistent en un désaxement relatif entre les deux faces de la visière entraînant un effet prismatique corrigeant le décalage angulaire perçu par le porteur du casque lorsqu'il regarde au travers de la visière dans une direction arbitraire et en l'adoption pour la visière de deux faces asphériques de type torique configurées l'une par rapport à l'autre de manière à réduire les décalages angulaires résiduels dans une zone de la visière axée sur ladite direction arbitraire.

Avantageusement, lesdits moyens optiques de correction consistent en un masque holographique de diffraction apposé sur l'une des faces de la visière et déterminé de façon à égaliser en tout point d'impact sur la visière, la direction des rayons lumineux collectés par les yeux du porteur de casque, avant et après leur traversée de la visière.

Avantageusement, le masque holographique de diffraction est apposé sur la face externe de la visière.

Avantageusement, le masque holographique de diffraction est accordé sur la couleur verte.

D'autres caractéristiques et avantages de l'invention ressortiront de la description ci-après de plusieurs modes de réalisation donnés à titre d'exemple. Cette description sera faite en regard du dessin dans lequel :

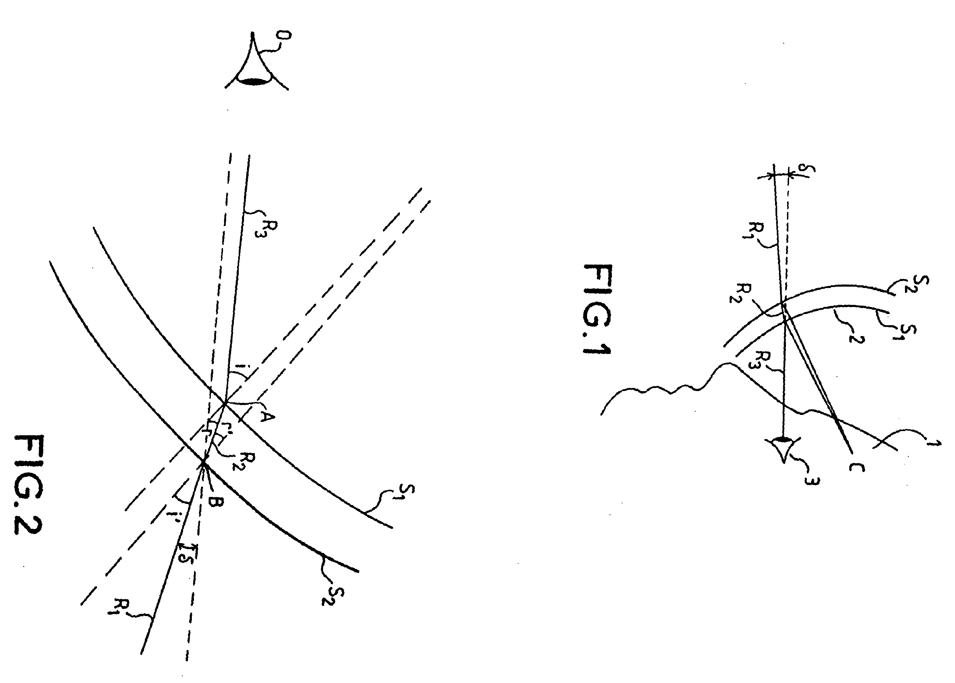

- une figure 1 est une vue en coupe montrant le décalage angulaire de l'axe de visée introduit par la présence d'une visière de protection classique bi-sphérique à épaisseur constante intercalée devant les yeux d'un observateur placés hors d'axe,

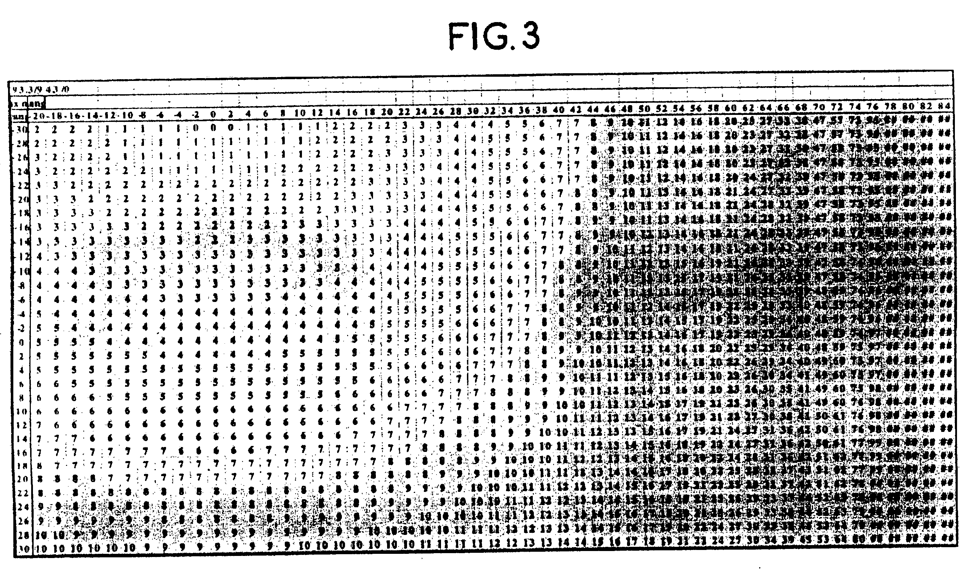

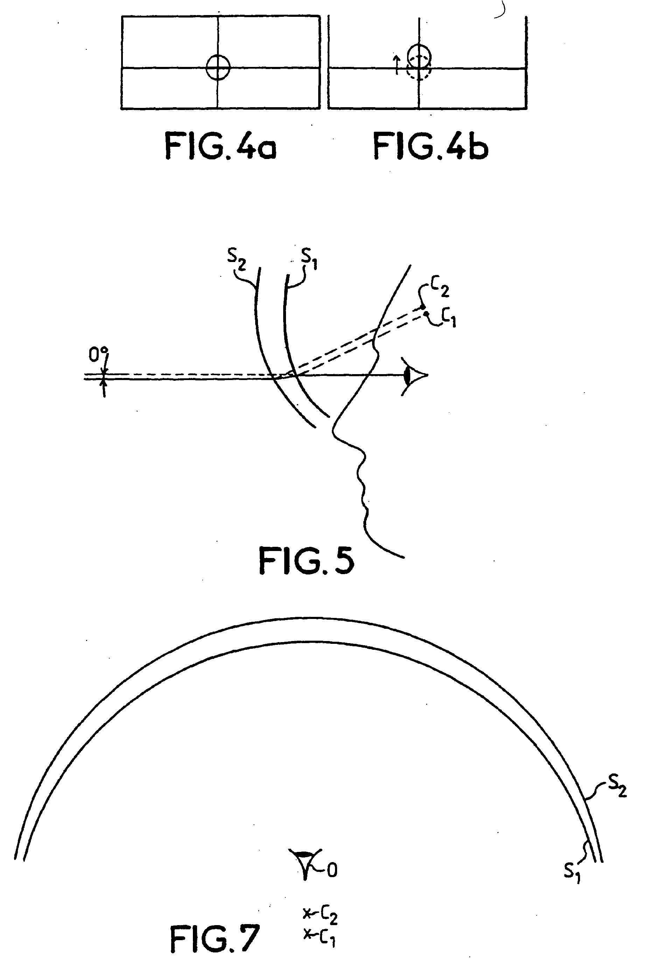

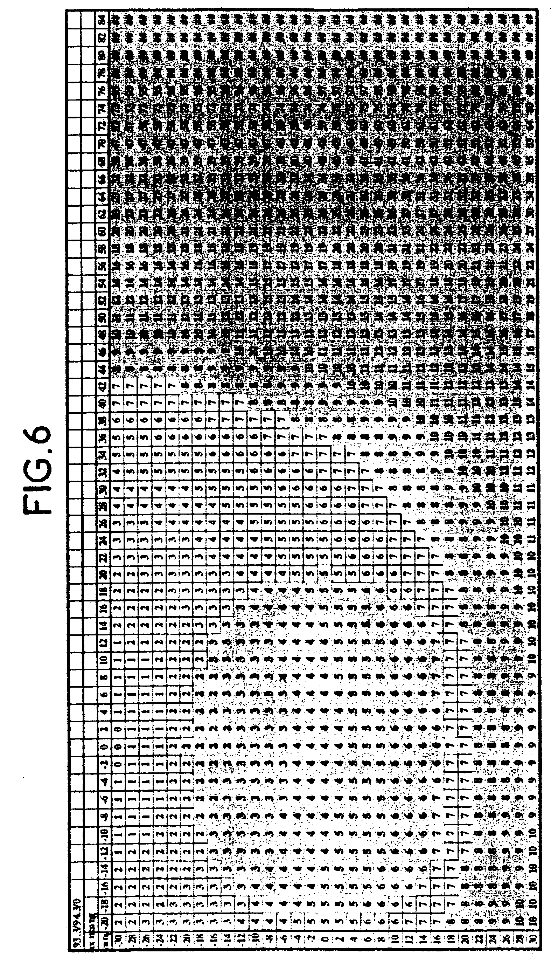

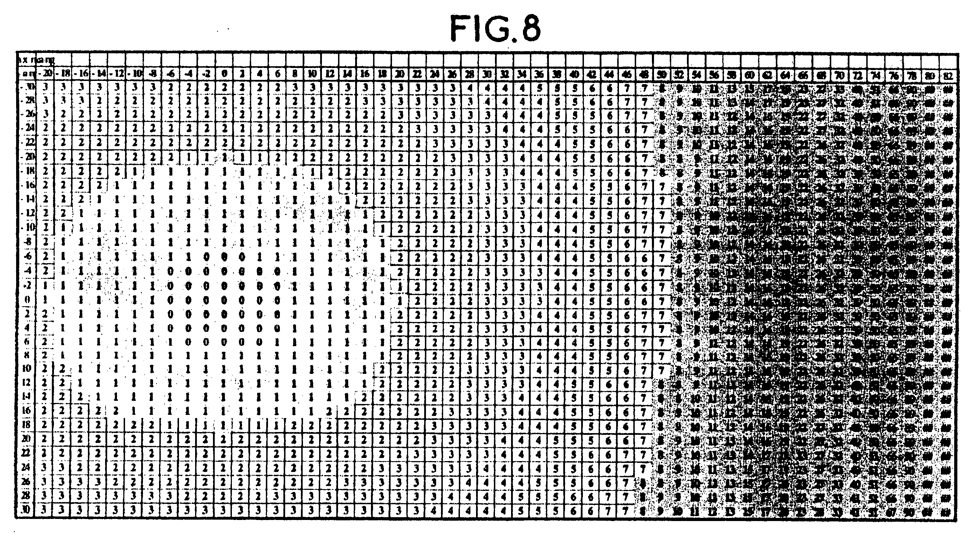

- une figure 2 est un schéma détaillant les phénomènes de réfraction responsables du décalage angulaire de l'axe de visée,
- une figure 3 est un tableau de mesure donnant une cartographie des décalages angulaires d'axe de visée provoqués par l'utilisation d'une visière bi-sphérique classique d'épaisseur constante, en fonction de l'orientation des yeux du porteur du casque,
- des figures 4a et 4b montrent l'effet de l'introduction d'une visière de protection classique devant les yeux d'un porteur de casque à système de projection d'image, l'image synthétique projetée étant matérialisée par un réticule et le paysage par un cercle de pointage,
- une figure 5 est une coupe verticale d'une visière bisphérique montrant la géométrie adoptée, avec désaxement des faces, pour éviter un décalage angulaire en direction axiale,
- une figure 6 est un tableau de mesure donnant une cartographie des décalages angulaires d'axe de visée en cas d'utilisation d'une visière ayant une géométrie conforme à celle illustrée par la figure 5, en fonction de l'orientation des yeux du porteur du casque,
- une figure 7 est une coupe horizontale d'une visière bisphérique selon l'invention montrant la géométrie adoptée, avec modification du rapport des rayons de courbure des faces, pour réduire les distorsions optiques provoquées par la visière, et
- une figure 8 est un tableau de mesure donnant une cartographie des décalages angulaires d'axe de visée en cas d'utilisation d'une visière ayant une géométrie conforme à celles illustrées aux figures 5 et 7, en fonction de l'orientation des yeux du porteur du casque,

La figure 1 illustre, de profil, la position des yeux d'un porteur de casque dont le visage est repéré en 1, par rapport à une visière 2 de protection articulée de forme classique, en position rabattue. Cette visière 2 de protection qui peut être une visière de protection mécanique ou optique présente une paroi plus ou moins transparente, d'épaisseur constante de forme sphérique et est articulée sur les côtés de la partie frontale du casque, selon un axe d'articulation passant par le centre de sa forme sphérique.

Cette forme sphérique et cette disposition adoptée, de manière habituelle, pour une visière répondent à diverses contraintes dont la nécessitée de laisser dégagé un certain espace en avant de la partie frontale du casque pour loger les éléments optiques éventuels d'un système de projection acheminant une image synthétique à un combineur optique placé devant l'un au moins des yeux du porteur du casque ainsi que la recherche d'un moindre encombrement de la visière aussi bien en position rabattue, en position relevée ou en cours de transition entre position rabattue et relevée. D'autres considérations liées à la présence d'un système optique de projection d'image en partie frontale du casque, comme la nécessité de rejeter en dehors du champ visuel les images parasites issues du système optique de projection d'image afin de ne pas gêner la vision directe militent également en faveur d'une telle forme et d'une telle disposition pour une visière de protection.

Par ailleurs, pour des questions de facilité de fabrication (possibilité d'obtention par simple thermoformage d'une plaque d'un matériau plastique transparent d'épaisseur uniforme), la visière 1 présente une paroi d'épaisseur constante, avec une face intérieure S1 et une face extérieure S2 sphériques concentriques. Elle est dite de forme bi-sphérique concentrique.

Sur la figure 1, la visière de protection 2, avec sa forme bisphérique concentrique, son épaisseur constante et sa disposition habituelle, est illustrée, en coupe verticale, par deux arcs de cercle concentriques S1 et S2 matérialisant ses faces interne et externe, placés devant le profil du visage du porteur du casque 1, avec leur centre de sphère commun C venant au niveau du front du porteur de casque. On constate alors qu'un rayon lumineux R parvenant sur l'oeil 3 du porteur de casque au travers de la visière subit deux réfractions, une première lorsqu'il pénètre dans la paroi de la visière 2 par sa surface externe S2 et une deuxième lorsqu'il quitte la paroi de la visière 2 par sa surface interne S1 car il aborde dans les deux cas, les surfaces externe et interne de la visière 2 sous des angles d'incidence éloignés des normales, celles-ci étant dirigées vers le front et non vers les yeux du porteur du casque. Par suite de ces deux réfractions, le rayon lumineux R suit une ligne brisée R1, R2, R3 et s'éloigne de la ligne droite d'un angle de décalage δ.

La figure 2 détaille le phénomène de double réfraction affectant un rayon lumineux parvenant aux yeux du porteur de casque regardant au travers d'une visière bisphérique concentrique disposée selon la configuration habituelle illustrée par la figure 1.

L'oeil 0 du porteur du casque est placé hors d'axe par rapport à la visière bi-sphérique concentrique. Le rayon lumineux R qui l'atteint subit donc aux traversées des surfaces interne S1 et externe S2 de la visière deux réfractions qui donnent à son parcours la forme d'une ligne brisée R1, R2, R3. Il arrive sur la surface extérieure S2 de la visière avec un angle d'incidence i' où il est réfracté une première fois. Il pénètre alors sous un angle d'incidence r' au sein de la paroi de la visière avant d'atteindre la surface intérieure S1 de la visière. Du fait de la forme bi-sphérique concentrique de la visière, il atteint la surface intérieure S1 de la visière sous un autre angle d'incidence r et se trouve réfracté en direction de l'oeil O du porteur du casque sous un angle d'incidence i.

Chaque réfraction respecte la loi de Descartes de sorte que l'on a :

$$\sin i' = n \sin r'$$

$$\sin i = n \sin r$$

Comme la visière bi-sphérique concentrique est vue hors d'axe, le rayon lumineux observé impacte sur les surfaces interne S1 et externe S2 de la visière en des points A et B qui ne sont pas sur un même rayon de la sphère de la paroi de la visière. Cela a deux conséquences :

- Les angles d'incidence r, i au point d'impact A et les angles d'incidence r', i' au point d'impact B se réfèrent à des normales différentes non parallèles,
- Les angles d'incidence r et r' du rayon lumineux aux extrémités de son trajet dans la paroi de la visière ne sont pas égaux.

Il en résulte que les angles d'incidence i' et i du rayon lumineux à son entrée et à sa sortie de la visière sont eux-mêmes inégaux et se réfèrent aussi à des normales différentes non parallèles. Les deux phénomènes jouent en sens opposé mais il n'en reste pas moins que la direction du rayon lumineux est modifiée par la présence de la visière d'un certain angle de décalage qui peut être déterminé à partir d'un simple calcul d'optique géométrique du ressort de l'homme du métier.

Avec les valeurs usuelles, une visière bi-sphérique concentrique d'un rayon de l'ordre de 10 cm, d'épaisseur constante de l'ordre de 2 mm, en un polycarbonate transparent d'indice de l'ordre de 1,5, vue par le porteur du casque sous un angle de désaxement de l'ordre de 25°, ce qui correspond à la position de l'oeil d'un observateur regardant devant lui, la présence de la visière entraîne un décalage angulaire vers le bas de l'ordre de 4 milliradians.

Plus généralement, le décalage angulaire se produit dans un plan renfermant le rayon lumineux considéré et les normales aux faces interne S1 et externe S2 de la visière aux points d'entrée et de sortie du rayon considéré sur la visière, et dépend de l'angle d'excentrement de ce rayon. Si l'on considère le rayon lumineux placé dans l'axe du champ visuel du porteur du casque, il a un angle d'excentrement qui dépend de son point d'impact sur la visière et donc de l'orientation des yeux du porteur du casque par rapport à la visière.

La figure 3 est un tableau donnant un exemple de cartographie des décalages angulaires en milliradians que l'on peut rencontrer avec l'exemple précité de visière bi-sphérique concentrique, en fonction de l'orientation du regard du porteur de casque par rapport à la visière repérée dans un système de coordonnées angulaires exprimées en degrés repérant en abscisse un angle en azimut et en ordonnée un angle en site.

On remarque que le décalage angulaire est assez variable et qu'il augmente progressivement lorsque le porteur du casque regarde vers les côtés ou vers le bas de la visière. Les variations de décalage angulaire en fonction de la direction du regard entraînent, pour le porteur du casque une distorsion du paysage qui réduit la largeur de son champ de vision et le pousse à maintenir son regard dans une direction voisine de l'axe de la visière. Il doit alors pallier la faiblesse de la largeur de son champ de vision par des mouvements de la tête.

Lorsqu'il met sa visière, le porteur du casque a l'impression de voir le paysage remonter. Cela ne présente pas d'inconvénient particulier en l'absence d'appareil de visée utilisant un système optique de projection d'image synthétique monté à même le casque. Par contre, en présence d'un tel système optique, la mise en place de la visière se traduit par une remontée du paysage par rapport à l'image synthétique projetée. En effet, lorsque l'image synthétique projetée comporte un réticule de visée, celui-ci ne se superpose pas, pour le porteur du casque, au même point du paysage selon que la visière est ou non en place. Les figures 4a et 4b illustrent ce phénomène. La figure 4a montre un réticule 4 provenant d'une image synthétique engendrée par un système optique de projection monté à même le casque parfaitement centré sur un objectif vu dans le paysage en l'absence de visière et matérialisé par un cercle 5. La figure 4b illustre la transformation de la situation de la figure 3a pour le porteur du casque dès qu'il met en place une visière. L'image synthétique et son réticule 4 n'ont pas bougé. Par contre le paysage et donc le cercle matérialisant l'objectif se sont déplacés vers le haut. Le porteur du casque lorsqu'il réaligne le réticule sur l'objectif apparent commet alors une erreur de désignation provenant du décalage angulaire introduit dans sa perception du paysage par la présence de la visière. Les systèmes de désignation devenant de plus en plus précis, l'erreur due à la présence d'une visière ne peut plus être négligée.

Pour la réduire, on propose de jouer sur les propriétés optiques d'une visière. Une première mesure consiste à introduire un effet prismatique compensateur au centre du champ de vision du porteur du casque où s'affiche le réticule de l'image synthétique en faisant basculer les faces interne S1 et externe S2 de la visière, l'une par rapport à l'autre autour d'un axe horizontal passant par ce centre de champ de vision. Le basculement consiste par exemple à faire pivoter vers le bas la face externe S2 de la visière autour de l'axe horizontal considéré de la valeur adéquate, sachant qu'un basculement d'angle $\alpha$ introduit un prisme d'angle $\alpha$ qui lorsque l'angle $\alpha$ est petit, ce qui est le cas, procure un décalage angulaire d de valeur :

$$d \cong (n-1)\alpha$$

Avec les valeurs adoptées précédemment, un indice de 1,5 et un décalage angulaire à corriger de 0,4 milliradian, il faut faire pivoter la face externe de la visière S2 par rapport à la face interne S1 d'un angle de l'ordre de 0,4 degré.

La figure 5 montre l'effet d'un tel pivotement sur le profil d'une visière. Celle-ci voit le centre C2 de sa face sphérique externe S2 désolidarisé du centre C1 de sa face sphérique interne S1 et légèrement déplacé vers le haut. Elle n'a plus une épaisseur constante mais une épaisseur variable qui croît du bas vers le haut. Pour une visière d'épaisseur moyenne de 2 mm, on peut concevoir une variation d'épaisseur de 1 à 3 mm depuis le bas vers le haut.

La figure 6 est un tableau de la cartographie du décalage angulaire obtenu avec une visière à laquelle on a appliqué un pivotement entre les faces externe S2 et interne S1 pour obtenir une correction du décalage angulaire dans la direction de l'axe du casque (regard du porteur de casque selon l'azimut 0 et le site 0 par rapport à la visière). On constate que l'on obtient bien la correction de décalage angulaire recherchée mais que celle-ci n'est complète que sur une zone de faible étendue centrée sur l'azimut 0 et le site 0.

On remarque que le prisme d'angle au sommet très petit (0,4°) introduit entre les deux faces de la visière pour la correction du décalage angulaire dans une direction privilégiée, ici celle correspondant à l'axe du casque, n'entraîne qu'un effet très faible de dispersion des composantes fondamentales de la lumière blanche, très en dessous du seuil de sensibilité de l'oeil et ne provoque pas d'effet sensible de décoloration du paysage.

Dans le cas d'une visière de protection solaire, teintée dans la masse, le fait d'être plus épaisse vers le haut que vers le bas lui donne un taux de filtrage de luminosité variable se dégradant du haut vers le bas. Ce dégradé est un avantage car il adapte la transmission de la visière à la luminosité du paysage, les zones les plus lumineuses d'un paysage correspondant au ciel et étant vues au travers de la partie supérieure de la visière.

Le problème du décentrage, par rapport au paysage, d'un réticule engendré par une image synthétique et centré sur l'azimut 0 et le site 0 par rapport à la visière est résolu. Cependant, la visière continue à provoquer des distorsions optiques du même ordre que précédemment réduisant la largeur du champ de vision du porteur du casque. En effet, le tableau de la figure 6 montre que, si les décalages angulaires ont été réduits en direction du bas de la visière, ils ont été légèrement aggravés en direction des côtés et du haut de la visière.

Pour lutter contre les distorsions optiques de la visière, on se propose de jouer sur la forme de l'une ou des deux faces de la visière.

Dans un premier temps, on n'intervient pas sur la face interne de la visière, car celle-ci peut avoir sa forme imposée par d'autres considérations. Elle peut en effet servir de combineur optique (miroir semi-transparent) pour un système optique de projection d'image synthétique monté sur le casque et avoir à ce titre une forme imposée.

On recherche alors la forme théorique à donner à la face externe de la visière pour corriger les décalages angulaires locaux constatés dans le tableau de la figure 6. Une manière de procéder consiste à approximer la vision binoculaire par une vision monoculaire en remplaçant les deux yeux du porteur du casque par un oeil cyclope disposé au milieu de son front et à approximer la face extérieure sphérique de la visière par une surface à facettes planes polygonales, chaque facette étant suffisamment petite pour ne pas être discernables à l'oeil. On détermine alors par des calculs géométriques les trajets des rayons parvenant à l'oeil cyclope en passant au travers de chacune des facettes de la face extérieure de la visière, et les décalages angulaires subis par ces rayons. On en déduit alors les corrections prismatiques à imposer à chacun des rayons, c'est-à-dire les corrections d'orientation à imposer à chacune des facettes de la face extérieure de la visière. Après réorientations, les facettes sont réajustées en profondeur en partant de celle correspondant au centre de la visière de manière à se raccorder au mieux et à diminuer le plus possible les aspérités de la forme d'ensemble obtenue. Cette opération de réajustement est rendue possible par le fait que les décalages angulaires varient de manière monotone en fonction de l'orientation des rayons par rapport à la visière. On obtient ainsi, à partir des facettes réorientées et réajustées, une nouvelle forme pour la face extérieure de la visière. Cette nouvelle forme définie par des fonctions continues affines par morceaux est alors lissée par traitement mathématique pour aboutir à une forme asphérique qui est celle donnant théoriquement à la visière un minimum de distorsion.

Cette forme asphérique théorique à laquelle on est parvenu pour la face extérieure de la visière peut se révéler difficile à réaliser. C'est pourquoi on peut être amené à l'approximer de manière plus ou moins fine.

On peut tout d'abord essayer de l'approximer par une forme sphérique. La face extérieure de la visière conserve alors sa forme sphérique et son orientation par rapport à la face interne sphérique mais voit son rayon de courbure modifié de manière à se rapprocher au mieux de la forme asphérique théorique (obtention d'un minimum de la somme des erreurs quadratiques subsistant entre les deux formes).

La figure 7 est une vue en coupe horizontale d'une visière obtenue de cette façon. On voit que les deux faces externe S2 et interne S1 de la visière sont sphériques mais les rayons de courbures de ces faces ne sont plus dans un rapport tel que l'épaisseur de la visière soit constante mais dans un rapport donnant à la visière le profil d'une lentille légèrement convergente, plus épaisse en son centre qu'à ses extrémités. Ainsi conçue, une visière avec une épaisseur de 2 mm en son centre se retrouve avec une épaisseur de l'ordre de 1mm sur les côtés et à sa base et avec une épaisseur de l'ordre de 3 mm à son sommet. Le rapport du rayon de courbure de sa face extérieure sur le rayon de courbure de sa face intérieure est réduit ici, dans une proportion de l'ordre de 1/100 ième par rapport à celui d'une visière bi-sphérique d'épaisseur constante.

La figure 8 est un tableau de la cartographie du décalage angulaire obtenu avec la visière précédente à laquelle on a appliqué un pivotement vertical entre les faces externe S2 et interne S1 pour obtenir une correction du décalage angulaire dans la direction de l'axe du casque (regard du porteur de casque selon l'azimut 0 et le site 0 par rapport à la visière) ainsi qu'une réduction du rayon de la face externe pour s'approcher de la forme asphérique théorique conduisant au minimum de distorsions. On constate que l'étendue de la zone de la visière sans décalage angulaire a plus que doublé et que les décalages angulaires à la périphérie de cette zone ont beaucoup diminué. Cela montre bien l'intérêt que l'on a, à jouer sur la position angulaire relative, dans le plan vertical des deux faces d'une visière bi-sphérique concentrique et sur le rapport des rayons de courbure des deux faces d'une telle visière pour diminuer les distorsions optiques qu'elle occasionne.

L'approximation de la forme théorique obtenue par calcul pour la face extérieure de la visière peut être améliorée en donnant à la face externe de la visière une forme asphérique déduite de la forme sphérique adoptée précédemment. En effet, une surface sphérique peut être définie en coordonnées cartésiennes par l'équation :

$$x^2 + y^2 + z^2 = R^2$$

Soit :

$$z = \mathrm{sph\grave{e}re}(x, y)$$

R est le rayon du cercle. C'est le seul paramètre sur lequel on peut jouer avec une surface en forme de calotte sphérique si l'on excepte son orientation.

On améliore les possibilités d'ajustement en passant à une surface asphérique définie à partir de l'équation de la sphère complétée par des termes d'ordre supérieur :

$$z = \mathrm{sph\grave{e}re}(x, y) + ah^2 + bh^4 + ch^6 \cdots$$

a, b, c étant des coefficients de réglage et

$$h^2 = \bar{x^2} + \bar{y^2}$$

Grâce aux paramètres a, b, c ajoutés, il est possible d'approcher de manière plus précise encore, la forme théorique obtenue par le calcul pour la face extérieure de la visière.

De manière plus générale, on peut, pour approximer la forme théorique obtenue par le calcul pour la face externe de la visière, partir, non pas de l'équation d'une sphère mais de l'équation d'un tore. Il vient alors :

$$z = \text{tore}(R, p, x, y) + ah^2 + bh^4 + ch^6 \cdots$$

a, b, c étant des coefficients de réglage différents des précédents et h valant toujours :

$$h^2 = x^2 + y^2$$

La technique que l'on vient de décrire pour réduire les décalages angulaires et donc les distorsions apportées par une visière, qui consiste à introduire un angle de pivotement dans le plan vertical entre les deux faces de la visière et à jouer sur la forme de l'une des faces de la visière pour approcher une forme théorique obtenue par calcul minimisant les décalages angulaires résiduels est applicable à tout type de visière, que les faces de la visière soient initialement bisphériques concentriques comme cela a été décrit ou que les faces initiales de la visière soient sphéro-torique, sphérique-asphérique ou asphérique-asphérique, de type bi-torique, asphéro-torique ou de type "carreaux de Bézier" ou autre.

Cette technique peut même être appliquée à plusieurs reprises à la même visière, de manière à parvenir par étapes, à une correction de plus en plus fine des distorsions optiques qu'elle occasionne. On peut notamment, dans le cas d'une visière bisphérique n'ayant pas une forme de surface interne imposée par un système de projection d'image synthétique monté sur le casque, soit parce qu'un tel système de projection est absent, soit parce que le combineur optique utilisé par ce système de projection optique ne met pas à contribution la surface interne de la visière, soit encore parce que la visière n'est qu'une deuxième visière, après avoir fait pivoter l'une deux faces de la visière par rapport à l'autre dans le plan vertical pour corriger le décalage angulaire dans l'axe du casque, remplacer la forme sphérique de la face externe de la visière par une forme asphérique se rapprochant de la forme théorique obtenue par calcul minimisant les distorsions, puis calculer à partir de la visière obtenue la forme théorique à adopter pour la face interne de la visière pour minimiser les distorsions résiduelles et remplacer la forme sphérique de la face interne de la visière par une forme asphérique se rapprochant de cette deuxième forme théorique pour parvenir finalement à une visière bi-asphérique avec un léger désaxement de ses faces dans le plan vertical.

L'emploi de déviations de correction par effet de prisme n'est pas le seul moyen pour lutter contre les décalages angulaires et les distorsions d'une visière. Il est également possible d'utiliser un masque holographique de diffraction sur l'une ou l'autre, ou sur les deux faces interne et externe de la visière. Comme précédemment, on évite de modifier les propriétés optiques de la face interne si celle-ci est utilisée par ailleurs pour présenter une image synthétique devant les yeux du porteur de casque, et l'on ne place qu'un seul masque holographique de diffraction sur la face externe de la visière.

Le masque holographique de diffraction est enregistré de la manière habituelle sur la face désirée de la visière. Pour ce faire, on peut utiliser deux points source cohérents, l'un réel, l'autre imaginaire mis à l'emplacement de l'oeil du porteur du casque (position fictive d'un oeil cyclope entre les deux yeux du porteur du casque) et enregistrer l'hologramme obtenu dans de la gélatine sensible recouvrant la face voulue de la visière. Cet hologramme enregistre les perturbations provoquées par la visière sur les rayons lumineux parvenant à l'oeil du porteur du casque, avec un signe opposé du fait des natures complémentaires réelle et imaginaire des points source.

Il est cependant difficile d'utiliser un masque holographique sur tout le spectre visible car son chromatisme est important. Cette technique est surtout utilisable lorsque l'on ne cherche pas à conserver intacte la colorisation du paysage. Le masque holographique de diffraction est alors accordé sur la couleur verte pour laquelle l'oeil présente sa meilleure sensibilité. Un tel masque holographique peut s'utiliser dans le cas d'une projection de symbologie sur la visière en couleur rouge. Dans ce cas, la face interne de la visière est utilisée en réflexion pour la couleur rouge, qu'elle provienne du système de projection d'image synthétique ou du paysage. Le porteur du casque voit donc un paysage avec une couleur rouge dégradée En effet, il est possible d'avoir, pour la projection de la symbologie, une sélection très forte de la couleur rouge sur une bande spectrale très réduite n'occupant qu'une fraction du domaine de la couleur rouge perçu par l'oeil. Ainsi, seule cette fraction de couleur rouge du paysage n'est pas transmise par la visière mais la couleur rouge n'est pas perdue dans son ensemble. Le porteur du casque perçoit les couleurs verte et bleue du paysage. La couleur bleue n'est pas traitée par le masque holographique mais cela n'est pas très gênant dans la mesure où l'oeil est beaucoup moins sensible à cette couleur qu'à la couleur verte.

## Revendications

1. Visière de protection pour casque comportant un système optique de projection d'images, ladite visière possédant une paroi transparente (2) présentant deux faces, l'une interne S1, l'autre externe S2, de formes générales sphériques, arrangée de manière à ce que, lorsque le dit casque est porté, les positions des yeux du porteur du casque soient excentrées latéralement et vers le bas par rapport au centre des sphères des faces externe et interne, ladite visière comportant des moyens optiques de réduction des décalages angulaires perçus à son travers par ledit porteur du casque, où lesdits moyens optiques de correction consistent, en outre, en un désaxement relatif entre les deux faces S1 S2 de la paroi de la visière donnant à cette paroi une épaisseur variable **caractérisé en ce que** le désaxement relatif de la face extérieure S2 de la visière par rapport à la face intérieure S1 de la visière est réalisé dans un plan vertical.

2. Visière selon la revendication 1, **caractérisée en ce que** le désaxement est réalisé vers le haut d'un angle de l'ordre du demi degré de la face extérieure S2 de la visière par rapport à la face intérieure S1 de la visière.

3. Visière selon la revendication 1, **caractérisée en ce que** le rapport du rayon de courbure de la face extérieure S2 de la visière sur le rayon de courbure de la face intérieure S1 de la visière est réduit par rapport à celui d'une visière bi-sphérique concentrique d'épaisseur constante.

4. Visière selon la revendication 3, **caractérisée en ce que** cette réduction du rapport du rayon de courbure de la face extérieure S2 sur celui de la face intérieure S1 de la visière est de l'ordre de 1/100ième par rapport à une visière bi-sphérique concentrique d'épaisseur constante.

5. Visière selon la revendication 1, **caractérisée en ce qu'**au moins une des faces est asphérique.

6. Visière selon la revendication 5, **caractérisée en ce qu'**une face est sphérique et l'autre face est asphérique de type torique.

7. Visière selon la revendication 5, **caractérisée en ce que,** lesdites faces asphériques sont de type torique.

**Claims**

1. Protective visor for a helmet that includes an optical image projection system, said visor having a transparent wall (2) having two faces, one an inner one S1 and the other an outer one S2, of generally spherical shape, arranged so that, when said helmet is being worn, the positions of the eyes of the helmet wearer are laterally offcentre downwards with respect to the centre of the spheres of the outer and inner faces, said visor comprising optical means for reducing angular offsets perceived through it by said helmet wearer, in which said optical correction means further consist of a relative axial displacement between the two faces S1, S2 of the visor wall giving a variable thickness to this wall, **characterized in that** the relative axial displacement of the outer face S2 of the visor with respect to the inner face S1 of the visor is in a vertical plane.

2. Visor according to Claim 1, **characterized in that** the axial displacement is upwards, through an angle of about half a degree, of the outer face S2 of the visor with respect to the inner face S1 of the visor.

3. Visor according to Claim 1, **characterized in that** the ratio of the radius of curvature of the outer face S2 of the visor to the radius of curvature of the inner face S1 of the visor is reduced compared with that of a concentric bispherical visor of constant thickness.

4. Visor according to Claim 3, **characterized in that** this reduction in the ratio of the radius of curvature of the outer face S2 to that of the inner face S1 of the visor is by about 1/100th compared with a concentric bispherical visor of constant thickness.

5. Visor according to Claim 1, **characterized in that** at least one of the faces is aspherical.

6. Visor according to Claim 5**, characterized in that** one face is spherical and the other face is aspherical of toric type.

7. Visor according to Claim 5, **characterized in that** said aspherical faces are of toric type.

**Patentansprüche**

1. Helm-Schutzvisier, das ein optisches Bildprojektionssystem aufweist, wobei das Visier eine transparente Wand (2) mit zwei Seiten, einer Innenseite S1 und einer Außenseite S2, von allgemein sphärischen Formen besitzt, die so angeordnet ist, dass, wenn der Helm getragen wird, die Positionen der Augen des Helmträgers bezüglich der Mitte der Sphären der Außen- und Innenseite seitlich und nach unten außermittig sind, wobei das Visier optische Einrichtungen zur Reduzierung der Winkelverschiebungen aufweist, die vom Helmträger durch es hindurch beobachtet werden, wobei die optischen Korrektureinrichtungen außerdem aus einem relativen Achsversatz zwischen den zwei Seiten S1, S2 der Wand des Visiers bestehen, was dieser Wand eine variable Dicke verleiht, **dadurch gekennzeichnet, dass** der relative Achsversatz der Außenseite S2 des Visiers bezüglich der Innenseite S1 des Visiers in einer senkrechten Ebene hergestellt wird.

2. Visier nach Anspruch 1, **dadurch gekennzeichnet,**

**dass** der Achsversatz nach oben um einen Winkel in der Größenordnung eines halben Grads der Außenseite S2 des Visiers bezüglich der Innenseite S1 des Visiers hergestellt wird.

3. Visier nach Anspruch 1, **dadurch gekennzeichnet, dass** das Verhältnis des Krümmungsradius der Außenseite S2 des Visiers zum Krümmungsradius der Innenseite S1 des Visiers bezüglich desjenigen eines konzentrischen bisphärischen Visiers konstanter Dicke reduziert ist.

4. Visier nach Anspruch 3, **dadurch gekennzeichnet, dass** diese Reduzierung des Verhältnisses des Krümmungsradius der Außenseite S2 zu demjenigen der Innenseite S1 des Visiers in der Größenordnung von 1/100 bezüglich eines konzentrischen bisphärischen Visiers konstanter Dicke liegt.

5. Visier nach Anspruch 1, **dadurch gekennzeichnet, dass** mindestens eine der Seiten asphärisch ist.

6. Visier nach Anspruch 5, **dadurch gekennzeichnet, dass** eine Seite sphärisch und die andere Seite asphärisch vom Ring-Typ ist.

7. Visier nach Anspruch 5, **dadurch gekennzeichnet, dass** die asphärischen Seiten vom Ring-Typ sind.

FIG.1

FIG.2

## FIG.3

FIG.4a          FIG.4b

FIG.5

FIG.7

FIG.6

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4081209 A
- US 5689323 A